# EUROPEAN PATENT APPLICATION

(11) **EP 4 691 831 A1**
(43) Date of publication of application: **11.02.2026**
(21) Application number: 24784609.0
(22) Date of filing: 15.02.2024
(51) Int. Cl.: B60L 15/20, H02P 5/46

(54) **ELECTRIC MOTOR CONTROL DEVICE**

(30) Priority: 07.04.2023 JP 2023062823
(71) Applicant: Hitachi, Ltd., Tokyo 100-8280 (JP)
(72) Inventor: HATSUSE, Wataru, Tokyo 100-8280 (JP); AJIMA, Toshiyuki, Tokyo 100-8280 (JP)
(74) Representative: MERH-IP Matias Erny Reichl Hoffmann Patentanwälte PartG mbB
(86) International application number: PCT/JP2024/005399
(87) International publication number: WO 2024/209806

(57) **Abstract**

An object of the present invention is to suppress a decrease in reliability of each electric motor that independently drives each wheel of a vehicle. An electric motor control device 3 is a device that controls each electric motor 2 that independently drives each wheel 1 of a vehicle 10. The electric motor control device 3 includes: a control information transmission/reception unit 31 that receives, from a higher-level control device 4, control information 41 including a torque command 412 for the electric motor 2 and driving state information 411 regarding a driving state of the vehicle 10; an electric motor state acquisition unit 32 that acquires electric motor state information 321 regarding a state of the electric motor 2; and a torque command switching unit 33 that switches between controlling the electric motor 2 according to the torque command 412 and controlling the electric motor 2 according to a corrected torque command 371 obtained by correcting the torque command 412 based on the control information 41 received from the higher-level control device 4 and the electric motor state information 321 acquired by the electric motor state acquisition unit 32.

## Description

### Technical Field

The present invention relates to an electric motor control device.

### Background Art

In recent years, due to an increasing demand for energy saving, an electric motor control device that controls an electric motor such as an alternating current (AC) motor has been applied to a wide range of applications such as automobiles, home appliances, infrastructures, and industrial equipment. In particular, in applications of electric vehicles, studies on an in-wheel motor which is an electric motor installed in each wheel of a vehicle are in progress in order to expand an interior space and a battery installation space.

In the in-wheel motor, there is a strong demand for miniaturization and high power density, and temperature management is important. The vehicle on which the in-wheel motor is mounted can drive each wheel independently. That is, the vehicle on which the in-wheel motor is mounted can have improved traveling performance and traveling safety by independent adjustment of a torque of each wheel according to a road surface condition such as a rough road. For example, when the vehicle on which the in-wheel motor is mounted enters a puddle or the like and the wheel is about to slip, the slip can be suppressed by adjusting the torque of the wheel. As described above, the vehicle on which the in-wheel motor is mounted can have improved traveling performance and traveling safety by independent control of the in-wheel motor installed on each wheel.

On the other hand, since the vehicle on which the in-wheel motor is mounted can drive each wheel independently, a difference in an operation rate between the electric motors that respectively drive the wheels becomes large, and a variation in a state (for example, a temperature, a magnetic flux, a deterioration level, or the like of the electric motor) of each electric motor tends to become large. As a result, in the vehicle on which the in-wheel motor is mounted, reliability of the electric motor having a high operation rate tends to decrease.

For example, PTL 1 is known as a technology for coping with such a decrease in reliability of the electric motor. PTL 1 discloses a technology of increasing a torque command to be distributed for an electric motor disposed upstream of a circulation path of a coolant for cooling the electric motor.

### Citation List

### Patent Literature

PTL 1: JP 2018-88768 A

### Summary of Invention

### Technical Problem

However, PTL 1 merely discloses a technology of distributing the torque command according to an arrangement relationship of the circulation path of the coolant and the electric motor, and does not disclose any countermeasure against a decrease in reliability of the electric motor due to a driving state of the vehicle or the state of the electric motor itself. Therefore, the technology disclosed in PTL 1 has room for improvement in terms of suppressing a decrease in reliability of the electric motor.

The present invention has been made in view of the above, and an object of the present invention is to suppress a decrease in reliability of each electric motor that independently drives each wheel of a vehicle.

### Solution to Problem

In order to solve the above problem, an electric motor control device of the present invention is an electric motor control device that controls each electric motor that independently drives each wheel of a vehicle, the electric motor control device including: a control information transmission/reception unit that receives, from a higher-level control device, control information including a torque command for the electric motor and driving state information regarding a driving state of the vehicle; an electric motor state acquisition unit that acquires electric motor state information regarding a state of the electric motor; and a torque command switching unit that switches between controlling the electric motor according to the torque command and controlling the electric motor according to a corrected torque command obtained by correcting the torque command based on the control information received from the higher-level control device and the electric motor state information acquired by the electric motor state acquisition unit.

### Advantageous Effects of Invention

According to the present invention, it is possible to suppress a decrease in reliability of each electric motor that independently drives each wheel of a vehicle.

Problems, configurations, and effects other than those described above will become apparent by the following description of embodiments.

### Brief Description of Drawings

[FIG. 1] FIG. 1 is a diagram for describing a vehicle including an electric motor control device.
[FIG. 2] FIG. 2 is a diagram illustrating a configuration of the electric motor control device illustrated in FIG. 1.
[FIG. 3] FIG. 3 is a diagram illustrating a configuration of a torque command switching unit illustrated in FIG. 2.
[FIG. 4] FIG. 4 is a flowchart illustrating processing of a torque command selection unit illustrated in FIG. 3.
[FIG. 5] FIG. 5 is a diagram for describing another example of an electric motor state determination unit and a corrected torque command computation unit illustrated in FIG. 3.

### Description of Embodiments

Hereinafter, embodiments of the present invention will be described with reference to the drawings. Note that configurations or functions denoted by the same reference signs in the respective embodiments are similar in the respective embodiments, and thus, a description thereof will be omitted unless otherwise specified.

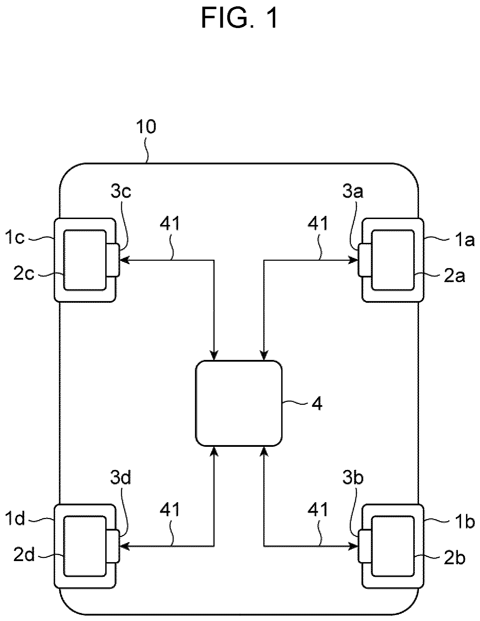

FIG. 1 is a diagram illustrating a vehicle 10 including electric motor control devices 3a to 3d.

The vehicle 10 is a vehicle on which electric motors 2a to 2d that independently drive wheels 1a to 1d are mounted. The vehicle 10 may be an electric vehicle that travels using a battery (not illustrated) as a power source. The electric motors 2a to 2d are provided corresponding to the wheels 1a to 1d, respectively. Each of the electric motors 2a to 2d may be an in-wheel motor installed in each of the wheels 1a to 1d. Each of the electric motors 2a to 2d may be an alternating current (AC) motor including a permanent magnet.

An operation of each of the electric motors 2a to 2d is controlled by each of the electric motor control devices 3a to 3d. The electric motor control devices 3a to 3d are provided corresponding to the electric motors 2a to 2d, respectively. Each of the electric motor control devices 3a to 3d may be a local electronic control unit (ECU) that controls each of the electric motors 2a to 2d. The electric motor control devices 3a to 3d control the respective electric motors 2a to 2d based on control information 41 from a higher-level control device 4.

The higher-level control device 4 may be a central ECU that integrally controls traveling of the vehicle 10. The higher-level control device 4 computes each torque command 412 to be given to each of the electric motors 2a to 2d, and transmits the control information 41 including each computed torque command 412 to each of the electric motor control devices 3a to 3d via an in-vehicle network of the vehicle 10.

In the present embodiment, the wheels 1a to 1d are also collectively referred to as "wheels 1". The electric motors 2a to 2d are also collectively referred to as "electric motors 2". The electric motor control devices 3a to 3d are also collectively referred to as "electric motor control devices 3".

The vehicle 10 can have improved traveling performance and traveling safety by adjustment of the torque command 412 included in the control information 41 from the higher-level control device 4 according to a road surface condition and the like. For example, it is conceivable to perform control to perform many regenerative braking operations in the electric motors 2 (for example, the electric motors 2a and 2c) on a front wheel side in a case where the vehicle 10 travels on a downhill with many curves. In this case, an operation rate of the electric motor 2 on the front wheel side increases, and reliability of the electric motor 2 on the front wheel side easily decreases. For example, in a case where only the right wheels 1 (for example, the wheels 1a and 1b) enter a puddle, it is conceivable to perform control to reduce the torque command 412 of the right electric motors 2 (for example, the electric motors 2a and 2b) to suppress a sudden change in a rotation speed of the right electric motors 2 in order to suppress a slip of the right wheels 1. In this case, an operation rate of the left electric motors 2 (for example, the electric motors 2c and 2d) increases, and reliability of the left electric motors 2 easily decreases. As described above, variations occur in the torque command 412 and the rotation speed of each electric motor 2 depending on the road surface condition or the like, and an increase in operation rate of a specific electric motor 2 and a decrease in reliability resulting therefrom become problems.

Therefore, the present embodiment provides the electric motor control device 3 capable of suppressing a decrease in reliability of each electric motor 2 while improving the traveling performance and traveling safety of the vehicle 10.

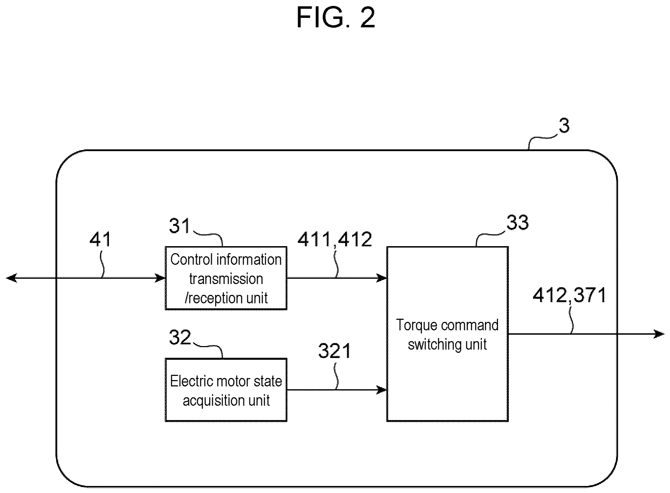

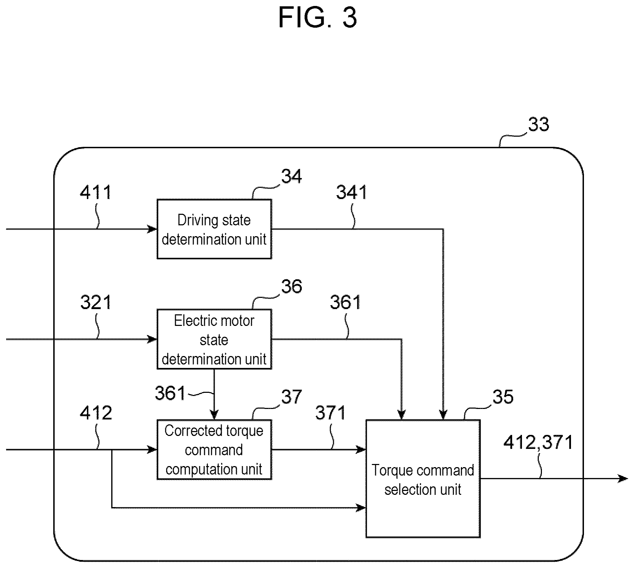

FIG. 2 is a diagram illustrating a configuration of the electric motor control device 3 illustrated in FIG. 1. FIG. 3 is a diagram illustrating a configuration of a torque command switching unit 33 illustrated in FIG. 2.

The electric motor control device 3 includes a control information transmission/reception unit 31, an electric motor state acquisition unit 32, and the torque command switching unit 33.

The control information transmission/reception unit 31 transmits and receives the control information 41 regarding the control of the electric motor 2 to and from the higher-level control device 4. Examples of information included in the control information 41 transmitted from the higher-level control device 4 to the electric motor control device 3 include driving state information 411 regarding a driving state of the vehicle 10 in addition to the torque command 412 to the electric motor 2. The control information transmission/reception unit 31 receives the control information 41 including the torque command 412 and the driving state information 411 from the higher-level control device 4.

The torque command 412 included in the control information 41 received from the higher-level control device 4 is a torque command given to the electric motor 2 to be controlled by the electric motor control device 3. The driving state information 411 included in the control information 41 is information reflecting the driving state of the vehicle 10 that changes according to a traveling situation such as the road surface condition. The driving state information 411 includes at least one piece of information of the torque command 412 for another electric motor 2 different from the electric motor 2 to be controlled mounted on the vehicle 10, the rotation speed of the another electric motor 2, and a steering angle of another wheel 1 driven by the another electric motor 2. The rotation speed of the electric motor 2 to be controlled and the steering angle of the wheel 1 driven by the electric motor 2 to be controlled may be transmitted from sensors that detect the rotation speed and the steering angle to the electric motor control device 3, or may be transmitted to the higher-level control device 4 without passing through the electric motor control device 3. In a case where the rotation speed and the steering angle are transmitted to the higher-level control device 4, the driving state information 411 includes at least one of the rotation speed of the electric motor 2 to be controlled and the steering angle of the wheel 1 driven by the electric motor 2 to be controlled.

The electric motor state acquisition unit 32 acquires electric motor state information 321 regarding a state of the electric motor 2 to be controlled. The electric motor state information 321 includes at least one of a temperature of the electric motor 2, a magnetic flux of a magnet included in the electric motor 2, a demagnetization rate of the magnet, and a deterioration level of a coil included in the electric motor 2. The electric motor state acquisition unit 32 can acquire the temperature of the electric motor 2 from a temperature sensor attached to the electric motor 2. The electric motor state acquisition unit 32 can compute the magnetic flux of the magnet from a voltage of the coil of the electric motor 2. The electric motor state acquisition unit 32 can compute the demagnetization rate from the computed magnetic flux. The demagnetization rate is a rate at which a magnetic force of the magnet is irreversibly demagnetized. The electric motor state acquisition unit 32 can compute the deterioration level of the coil from a current of the coil of the electric motor 2. The deterioration level of the coil indicates the deterioration level in insulation performance of the coil due to deterioration or the like of an insulator covering the coil.

The torque command switching unit 33 switches between controlling the electric motor 2 according to the torque command 412 for the electric motor 2 to be controlled and controlling the electric motor 2 according to a corrected torque command 371 obtained by correcting the torque command 412, based on the control information 41 received from the higher-level control device 4 and the electric motor state information 321 acquired by the electric motor state acquisition unit 32.

Specifically, as illustrated in FIG. 3, the torque command switching unit 33 includes a driving state determination unit 34, an electric motor state determination unit 36, a corrected torque command computation unit 37, and a torque command selection unit 35.

The driving state determination unit 34 determines whether or not the driving state of the vehicle 10 is a stable state based on the driving state information 411 included in the control information 41 received from the higher-level control device 4. The stable state refers to a state in which the driving of the vehicle 10 that changes according to the traveling situation such as the road surface condition is stable. The state in which the driving of the vehicle 10 is stable is a state in which a change amount of each of a speed and a steering angle of the vehicle 10 is small as when the vehicle 10 is cruising.

The driving state determination unit 34 of the present embodiment calculates a difference between the electric motor 2 to be controlled and the another electric motor 2 for at least one piece of information (the torque command 412, the rotation speed of the electric motor 2, or the steering angle of the wheel 1) included in the driving state information 411. Then, in a case where the calculated difference is less than a predetermined threshold, the driving state determination unit 34 determines that the driving state of the vehicle 10 is the stable state. In a case where the calculated difference is equal to or more than the threshold, the driving state determination unit 34 determines that the driving state of the vehicle 10 is not the stable state (unstable state). Then, the driving state determination unit 34 outputs a determination result 341 of the driving state determination unit 34 to the torque command selection unit 35.

The electric motor state determination unit 36 determines whether or not the state of the electric motor 2 to be controlled is a high operation state based on the electric motor state information 321 acquired by the electric motor state acquisition unit 32. The high operation state is a state in which the operation rate of the electric motor 2 is high.

The electric motor state determination unit 36 of the present embodiment determines whether or not at least one piece of information (the temperature of the electric motor 2, the magnetic flux of the magnet, the demagnetization rate of the magnet, or the deterioration level of the coil) included in the electric motor state information 321 exceeds a predetermined allowable value. In a case where at least one piece of information included in the electric motor state information 321 exceeds the allowable value, the electric motor state determination unit 36 determines that the state of the electric motor 2 to be controlled is the high operation state. In a case where at least one piece of information included in the electric motor state information 321 does not exceed the allowable value, the electric motor state determination unit 36 determines that the state of the electric motor 2 to be controlled is not the high operation state (normal operation state). Then, the electric motor state determination unit 36 outputs a determination result 361 of the electric motor state determination unit 36 to the corrected torque command computation unit 37 and the torque command selection unit 35.

For example, in a case where the temperature of the electric motor 2 acquired by the electric motor state acquisition unit 32 is higher than the allowable value, the electric motor state determination unit 36 determines that the state of the electric motor 2 to be controlled is the high operation state. For example, in a case where the magnetic flux of the magnet acquired by the electric motor state acquisition unit 32 is lower than the allowable value, the electric motor state determination unit 36 determines that the state of the electric motor 2 to be controlled is the high operation state. For example, in a case where the demagnetization rate acquired by the electric motor state acquisition unit 32 is higher than the allowable value, the electric motor state determination unit 36 determines that the state of the electric motor 2 to be controlled is the high operation state. For example, in a case where the deterioration level of the coil acquired by the electric motor state acquisition unit 32 is higher than the allowable value, the electric motor state determination unit 36 determines that the state of the electric motor 2 to be controlled is the high operation state.

The corrected torque command computation unit 37 computes the corrected torque command 371 obtained by correcting the torque command 412 received from the higher-level control device 4 based on the determination result 361 of the electric motor state determination unit 36. Specifically, in a case where it is determined that the state of the electric motor 2 to be controlled is the high operation state, the corrected torque command computation unit 37 computes the corrected torque command 371 corrected so as to have a value smaller than the torque command 412 received from the higher-level control device 4. The corrected torque command computation unit 37 outputs the computed corrected torque command 371 to the torque command selection unit 35.

The value of the corrected torque command 371 is not particularly limited as long as the value is smaller than the torque command 412. For example, the corrected torque command computation unit 37 may compute the corrected torque command 371 by computing, as a correction amount, a value obtained by multiplying a difference in electric motor state information 321 (the temperature, the magnetic flux, or the like) between the electric motor 2 to be controlled and the another electric motor 2 by a predetermined gain and subtracting the computed correction amount from the torque command 412. The electric motor state information 321 of the another electric motor 2 can be transmitted from the higher-level control device 4 and received by the control information transmission/reception unit 31. For example, the corrected torque command computation unit 37 may compute the corrected torque command 371 by multiplying the torque command 412 received from the higher-level control device 4 by a coefficient of 0 or more and less than 1. Although it is an extreme example, the corrected torque command computation unit 37 may set the corrected torque command 371 to 0.

The torque command selection unit 35 selects a torque command to be given to the electric motor 2 to be controlled based on at least one of the determination result 341 of the driving state determination unit 34 and the determination result 361 of the electric motor state determination unit 36.

Specifically, in a case where it is determined that the driving state of the vehicle 10 is the stable state, the torque command selection unit 35 outputs the corrected torque command 371 such that the electric motor 2 to be controlled is controlled according to the corrected torque command 371 corrected so as to have a value smaller than the torque command 412. On the other hand, in a case where it is determined that the driving state of the vehicle 10 is not the stable state, the torque command selection unit 35 outputs the torque command 412 such that the electric motor 2 to be controlled is controlled according to the torque command 412.

In a case where it is determined that the state of the electric motor 2 to be controlled is the high operation state, the torque command selection unit 35 outputs the corrected torque command 371 such that the electric motor 2 to be controlled is controlled according to the corrected torque command 371 corrected so as to have a value smaller than the torque command 412. On the other hand, in a case where it is determined that the state of the electric motor 2 to be controlled is not the high operation state, the torque command selection unit 35 outputs the torque command 412 such that the electric motor 2 to be controlled is controlled according to the torque command 412.

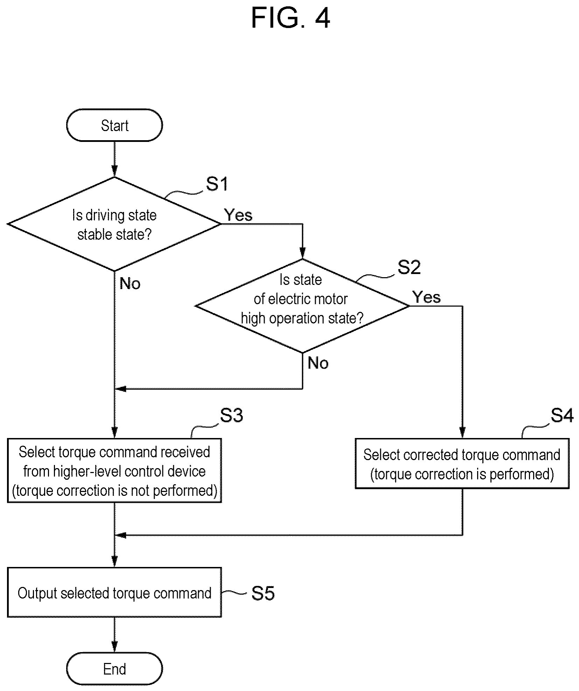

Furthermore, the torque command selection unit 35 can select the torque command to be given to the electric motor 2 to be controlled based on both the determination result 341 of the driving state determination unit 34 and the determination result 361 of the electric motor state determination unit 36. In this case, the torque command selection unit 35 preferably selects the torque command to be given to the electric motor 2 to be controlled by executing the processing illustrated in FIG. 4.

FIG. 4 is a flowchart illustrating processing executed by the torque command selection unit 35 illustrated in FIG. 3.

In step S1, the torque command selection unit 35 checks the determination result 341 of the driving state determination unit 34 and determines whether or not the driving state of the vehicle 10 has been determined to be the stable state. In a case where it has been determined that the driving state of the vehicle 10 is the stable state (step S1: Yes), the torque command selection unit 35 proceeds to step S2. In a case where it has been determined that the driving state of the vehicle 10 is not the stable state (step S1: No), the torque command selection unit 35 proceeds to step S3.

In step S2, the torque command selection unit 35 checks the determination result 361 of the electric motor state determination unit 36, and determines whether or not it has been determined that the state of the electric motor 2 to be controlled is the high operation state. In a case where it has been determined that the state of the electric motor 2 to be controlled is the high operation state (step S2: Yes), the torque command selection unit 35 proceeds to step S4. In a case where it has been determined that the state of the electric motor 2 to be controlled is not the high operation state (step S2: No), the torque command selection unit 35 proceeds to step S3.

In step S3, the torque command selection unit 35 selects the torque command 412 received from the higher-level control device 4 as the torque command to be given to the electric motor 2 to be controlled. That is, the electric motor control device 3 does not correct the torque command 412. Thereafter, the torque command selection unit 35 proceeds to step S5.

In step S4, the torque command selection unit 35 selects the corrected torque command 371 computed by the corrected torque command computation unit 37 as the torque command to be given to the electric motor 2 to be controlled. That is, the electric motor control device 3 corrects the torque command 412.

In step S5, the torque command selection unit 35 outputs the selected torque command 412 or corrected torque command 371 to a drive circuit that drives the electric motor 2 to be controlled. Thereafter, the torque command selection unit 35 ends the processing illustrated in FIG. 4.

As illustrated in FIG. 4, the torque command selection unit 35 selects the torque command to be given to the electric motor 2 to be controlled based on the determination result 341 as to whether or not the driving state of the vehicle 10 is the stable state in preference to the determination result 361 as to whether or not the state of the electric motor 2 is the high operation state.

That is, in a case where it is determined that the driving state of the vehicle 10 is the stable state and the state of the electric motor 2 to be controlled is the high operation state, the torque command selection unit 35 outputs the corrected torque command 371 such that the electric motor 2 to be controlled is controlled according to the corrected torque command 371 corrected so as to have a value smaller than the torque command 412. On the other hand, in a case where it is determined that the driving state is not the stable state, the torque command selection unit 35 outputs the torque command 412 such that the electric motor 2 to be controlled is controlled according to the torque command 412 regardless of whether or not the state of the electric motor 2 to be controlled is the high operation state.

In a case where the driving state of the vehicle 10 is not the stable state, the higher-level control device 4 adjusts the torque command 412 according to the traveling situation such as the road surface condition and transmits the adjusted torque command to the electric motor control device 3 in order to ensure the traveling performance and traveling safety of the vehicle 10. The torque command selection unit 35 that executes the processing illustrated in FIG. 4 can select the corrected torque command 371 and give the corrected torque command 371 to the electric motor 2 to be controlled only in a case where the driving state of the vehicle 10 is the stable state. Therefore, the electric motor control device 3 can suppress a decrease in reliability of the electric motor 2 without sacrificing the traveling performance and traveling safety of the vehicle 10.

As described above, the electric motor control device 3 of the present embodiment is a device that controls each electric motor 2 that independently drives each wheel 1 of the vehicle 10. The electric motor control device 3 includes the control information transmission/reception unit 31 that receives, from the higher-level control device 4, the control information 41 including the torque command 412 for the electric motor 2 and the driving state information 411 regarding the driving state of the vehicle 10, the electric motor state acquisition unit 32 that acquires the electric motor state information 321 regarding the state of the electric motor 2, and the torque command switching unit 33 that switches between controlling the electric motor 2 according to the torque command 412 and controlling the electric motor 2 according to the corrected torque command 371 obtained by correcting the torque command 412 based on the control information 41 received from the higher-level control device 4 and the electric motor state information 321 acquired by the electric motor state acquisition unit 32.

As a result, the electric motor control device 3 can switch the torque command to be given to the electric motor 2 between the torque command 412 received from the higher-level control device 4 and the corrected torque command 371 based on the driving state of the vehicle 10 and the state of the electric motor 2. Therefore, before the reliability of the electric motor 2 decreases due to the driving state of the vehicle 10 and the state of the electric motor 2, the electric motor control device 3 can switch the torque command to be given to the electric motor 2 to the corrected torque command 371 that can suppress the decrease in reliability. Therefore, according to the present embodiment, it is possible to suppress the decrease in reliability of each electric motor 2 that independently drives each wheel 1 of the vehicle.

Further, in the electric motor control device 3 of the present embodiment, the torque command switching unit 33 determines whether or not the driving state of the vehicle 10 is the stable state in which the driving of the vehicle 10 is stable based on the driving state information 411. In a case where it is determined that the driving state is the stable state, the torque command switching unit 33 outputs the corrected torque command 371 such that the electric motor 2 to be controlled is controlled according to the corrected torque command 371 corrected so as to have a value smaller than the torque command 412. In a case where it is determined that the driving state is not the stable state, the torque command switching unit 33 outputs the torque command 412 such that the electric motor 2 to be controlled is controlled according to the torque command 412.

Accordingly, in a case where the driving state of the vehicle 10 is not the stable state, the electric motor control device 3 can give the torque command 412 adjusted by the higher-level control device 4 to the electric motor 2 to be controlled, so that it is possible to reliably ensure the traveling performance and traveling safety. In a case where the driving state of the vehicle 10 is the stable state, the electric motor control device 3 can give the corrected torque command 371 corrected so as to have a value smaller than the torque command 412 to the electric motor 2 to be controlled, so that the increase in operation rate of the electric motor 2 can be suppressed, and the decrease in reliability can be suppressed. Therefore, according to the present embodiment, it is possible to suppress the decrease in reliability of each electric motor 2 that independently drives each wheel 1 of the vehicle while reliably ensuring the traveling performance and traveling safety of the vehicle 10.

Furthermore, in the electric motor control device 3 of the present embodiment, the torque command switching unit 33 determines whether or not the state of the electric motor 2 to be controlled is the high operation state in which the operation rate of the electric motor 2 is high based on the electric motor state information 321. In a case where it is determined that the state of the electric motor 2 to be controlled is the high operation state, the torque command switching unit 33 outputs the corrected torque command 371 such that the electric motor 2 to be controlled is controlled according to the corrected torque command 371 corrected so as to have a value smaller than the torque command 412. In a case where it is determined that the state of the electric motor 2 to be controlled is not the high operation state, the torque command switching unit 33 outputs the torque command 412 such that the electric motor 2 to be controlled is controlled according to the torque command 412.

As a result, in a case where the state of the electric motor 2 is the high operation state, the electric motor control device 3 can give the corrected torque command 371 corrected so as to have a value smaller than the torque command 412 to the electric motor 2 to be controlled, so that the increase in operation rate of the electric motor 2 can be reliably suppressed, and the decrease in reliability can be reliably suppressed. In a case where the state of the electric motor 2 is not the high operation state, the electric motor control device 3 can give the torque command 412 adjusted by the higher-level control device 4 to the electric motor 2 to be controlled, so that it is possible to ensure the traveling performance and traveling safety. Therefore, according to the present embodiment, it is possible to reliably suppress the decrease in reliability of each electric motor 2 that independently drives each wheel 1 of the vehicle while ensuring the traveling performance and traveling safety of the vehicle 10.

Furthermore, in the electric motor control device 3 of the present embodiment, in a case where it is determined that the driving state is the stable state and the state of the electric motor 2 to be controlled is the high operation state, the torque command switching unit 33 outputs the corrected torque command 371 such that the electric motor 2 to be controlled is controlled according to the corrected torque command 371 corrected so as to have a value smaller than the torque command 412. In a case where it is determined that the driving state is not the stable state, the torque command switching unit 33 outputs the torque command 412 such that the electric motor 2 to be controlled is controlled according to the torque command 412 regardless of whether or not the state of the electric motor 2 to be controlled is the high operation state.

As a result, in a case where the driving state of the vehicle 10 is not the stable state, the electric motor control device 3 can reliably give the torque command 412 adjusted by the higher-level control device 4 to the electric motor 2 to be controlled, so that it is possible to reliably ensure the traveling performance and traveling safety of the vehicle 10. In a case where it is determined that the driving state is the stable state and the state of the electric motor 2 to be controlled is the high operation state, the electric motor control device 3 can give the corrected torque command 371 corrected so as to have a value smaller than the torque command 412 to the electric motor 2 to be controlled. Therefore, the increase in operation rate of the electric motor 2 can be reliably suppressed, and the decrease in reliability can be reliably suppressed. Therefore, according to the present embodiment, it is possible to reliably suppress the decrease in reliability of each electric motor 2 that independently drives each wheel 1 of the vehicle while reliably ensuring the traveling performance and traveling safety of the vehicle 10 without sacrificing.

Further, in the electric motor control device 3 of the present embodiment, the driving state information 411 includes at least one piece of information of the torque command 412 for the another electric motor 2 different from the electric motor 2 to be controlled, the rotation speed of the another electric motor 2, and the steering angle of the another wheel 1 driven by the another electric motor 2. The torque command switching unit 33 calculates a difference between the electric motor 2 to be controlled and the another electric motor 2 for the at least one piece of information included in the driving state information 411. The torque command switching unit 33 determines that the driving state of the vehicle 10 is the stable state in a case where the calculated difference is less than the threshold, and determines that the driving state of the vehicle 10 is not the stable state in a case where the calculated difference is equal to or more than the threshold.

As a result, the electric motor control device 3 can accurately determine whether or not the driving state of the vehicle 10 is the stable state based on an actual state. Therefore, the electric motor control device 3 can accurately switch between controlling the electric motor 2 according to the torque command 412 adjusted by the higher-level control device 4 and controlling the electric motor 2 according to the corrected torque command 371 corrected so as to have a value smaller than the torque command 412. Therefore, the electric motor control device 3 can appropriately achieve both the ensuring of the traveling performance and traveling safety of the vehicle 10 and the suppression of the decrease in reliability of the electric motor 2. Therefore, according to the present embodiment, it is possible to appropriately suppress the decrease in reliability of each electric motor 2 that independently drives each wheel 1 of the vehicle while appropriately ensuring the traveling performance and traveling safety of the vehicle 10.

Furthermore, in the electric motor control device 3 of the present embodiment, the electric motor state information 321 includes at least one piece of information of the temperature of the electric motor 2, the magnetic flux of the magnet included in the electric motor 2, the demagnetization rate of the magnet, and the deterioration level of the coil included in the electric motor 2. The torque command switching unit 33 determines that the state of the electric motor 2 to be controlled is the high operation state in a case where the at least one piece of information included in the electric motor state information 321 exceeds the allowable value, and determines that the state of the electric motor 2 to be controlled is not the high operation state in a case where the at least one piece of information included in the electric motor state information 321 does not exceed the allowable value.

As a result, the electric motor control device 3 can accurately determine whether or not the state of the electric motor 2 to be controlled is the high operation state based on the actual state. Therefore, the electric motor control device 3 can accurately switch between controlling the electric motor 2 according to the torque command 412 adjusted by the higher-level control device 4 and controlling the electric motor 2 according to the corrected torque command 371 corrected so as to have a value smaller than the torque command 412. Therefore, the electric motor control device 3 can appropriately achieve both the ensuring of the traveling performance and traveling safety of the vehicle 10 and the suppression of the decrease in reliability of the electric motor 2. Therefore, according to the present embodiment, it is possible to appropriately suppress the decrease in reliability of each electric motor 2 that independently drives each wheel 1 of the vehicle while appropriately ensuring the traveling performance and traveling safety of the vehicle 10.

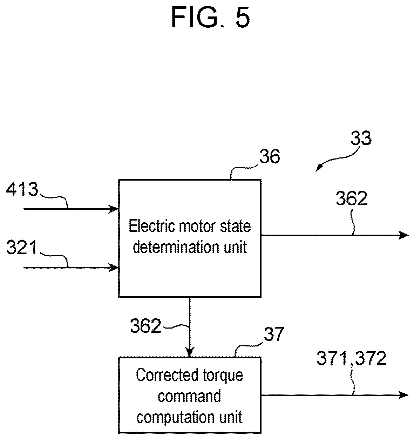

FIG. 5 is a diagram illustrating another example of the electric motor state determination unit 36 and the corrected torque command computation unit 37 illustrated in FIG. 3.

The control information transmission/reception unit 31 can receive a determination result 413 as to whether or not the state of the another electric motor 2 is the high operation state from the higher-level control device 4. In this case, the electric motor state determination unit 36 can not only determine whether or not the state of the electric motor 2 to be controlled is the high operation state, but also acquire the determination result 413 regarding the state of the another electric motor 2 as illustrated in FIG. 5. Then, the electric motor state determination unit 36 illustrated in FIG. 5 outputs a determination result 362 regarding the state of each of all the electric motors 2 of the vehicle 10 including the electric motor 2 to be controlled and the another electric motors 2 to the corrected torque command computation unit 37 and the torque command selection unit 35.

In a case where it is determined that the state of the electric motor 2 to be controlled is the high operation state, the corrected torque command computation unit 37 illustrated in FIG. 5 computes the corrected torque command 371 corrected so as to have a value smaller than the torque command 412 received from the higher-level control device 4, as in FIG. 3. In a case where it is determined that the state of the electric motor 2 to be controlled is not the high operation state and the state of the another electric motor 2 is the high operation state, the corrected torque command computation unit 37 illustrated in FIG. 5 computes a corrected torque command 372 corrected so as to have a value larger than the torque command 412 received from the higher-level control device 4.

The corrected torque command computation unit 37 illustrated in FIG. 5 outputs the computed corrected torque commands 371 and 372 to the torque command selection unit 35. The torque command selection unit 35 selects the torque command to be given to the electric motor 2 to be controlled based on the determination result 341 of the driving state determination unit 34 and the determination result 362 for the state of each of all the electric motors 2.

In particular, in a case where it is determined that the state of the electric motor 2 to be controlled is the high operation state, the torque command selection unit 35 outputs the corrected torque command 371 such that the electric motor 2 to be controlled is controlled according to the corrected torque command 371 corrected so as to have a value smaller than the torque command 412. On the other hand, in a case where it is determined that the state of the electric motor 2 to be controlled is not the high operation state and the state of the another electric motor 2 is the high operation state, the torque command selection unit 35 outputs the corrected torque command 372 such that the electric motor 2 to be controlled is controlled according to the corrected torque command 372 corrected so as to have a value larger than the torque command 412.

As a result, in a case where the state of the electric motor 2 to be controlled is the high operation state, the electric motor control device 3 can give the corrected torque command 371 corrected so as to have a value smaller than the torque command 412 to the electric motor 2 to be controlled, so that the decrease in the reliability of the electric motor 2 can be reliably suppressed. Even in a case where the corrected torque command 371 corrected so as to have a value smaller than the torque command 412 is given to the another electric motor 2 in the high operation state, the electric motor control device 3 can give the corrected torque command 372 corrected so as to have a value larger than the torque command 412 to the electric motor 2 to be controlled that is not in the high operation state. Therefore, since the electric motor control device 3 can compensate for an insufficient torque of the vehicle 10 as a whole by the electric motor 2 that is not in the high operation state, it is possible to suppress deceleration of the vehicle 10 due to the insufficient torque of the vehicle 10. Therefore, according to the present embodiment, it is possible to reliably suppress the decrease in reliability of each electric motor 2 that independently drives each wheel 1 of the vehicle while reliably ensuring the traveling performance and traveling safety of the vehicle 10.

When computing the corrected torque command 372 corrected so as to have a value larger than the torque command 412, the corrected torque command computation unit 37 illustrated in FIG. 5 can set an upper limit value of the corrected torque command 372. Specifically, the corrected torque command computation unit 37 sets the upper limit value of the corrected torque command 372 such that a tangential force generated in the wheel 1 driven by the electric motor 2 to be controlled becomes equal to or less than a maximum tangential force Fmax that can be generated in the wheel 1. In general, the maximum tangential force Fmax that can be generated in the wheel 1 is µmax × P (Fmax = µmax × P), in which a maximum value of an adhesion ratio of the wheel 1 for a road surface is µmax, and a load of the wheel 1 in a vertical direction is P. When the tangential force generated in the wheel 1 by the corrected torque command 372 becomes greater than the maximum tangential force Fmax, the wheel 1 slips. Therefore, the corrected torque command computation unit 37 illustrated in FIG. 5 sets the upper limit value of the corrected torque command 372 such that the tangential force generated in the wheel 1 becomes equal to or less than the maximum tangential force Fmax that can be generated in the wheel 1.

As a result, the electric motor control device 3 can suppress the slip of the wheel 1 even in a case where the corrected torque command 372 corrected so as to have a value larger than the torque command 412 is given to the electric motor 2 to be controlled. Therefore, according to the present embodiment, it is possible to suppress the decrease in reliability of each electric motor 2 that independently drives each wheel 1 of the vehicle while further reliably ensuring the traveling performance and traveling safety of the vehicle 10.

Note that the present invention is not limited to the embodiments described above, but includes various modified examples. For example, the embodiments described above have been described in detail in order to explain the present invention in an easy-to-understand manner, and the present invention is not necessarily limited to those having all the configurations described. Further, a part of a configuration of an embodiment can be replaced with a configuration of another embodiment, and to a configuration of an embodiment, a configuration of another embodiment can be added. In addition, a part of the configuration of each embodiment can be added with another configuration, can be deleted, and can be replaced with another configuration.

In addition, some or all of the above-described configurations, functions, processing units, processing means, and the like may be implemented by hardware, for example, by designing with an integrated circuit. In addition, each of the above-described configurations, functions, and the like may be implemented by software in a manner in which a processor interprets and executes a program for implementing each function. Information such as a program, a table, and a file for implementing each function can be stored in a recording device such as a memory, a hard disk, or a solid state drive (SSD), or a recording medium such as an IC card, an SD card, or a DVD.

In addition, the control lines and information lines indicate those that are considered necessary for explanation, and do not necessarily indicate all the control lines and information lines in the product. In practice, it can be considered that almost all configurations are interconnected. Reference Signs List

1a to 1d wheel
2a to 2d electric motor
3,3a to 3d electric motor control device
31 control information transmission/reception unit
32 electric motor state acquisition unit
321 electric motor state information
33 torque command switching unit
371, 372 corrected torque command
4 higher-level control device
41 control information
411 driving state information
412 torque command
413 determination result
10 vehicle

## Claims

1. An electric motor control device that controls each electric motor that independently drives each wheel of a vehicle, the electric motor control device comprising:
a control information transmission/reception unit that receives, from a higher-level control device, control information including a torque command for the electric motor and driving state information regarding a driving state of the vehicle;
an electric motor state acquisition unit that acquires electric motor state information regarding a state of the electric motor; and
a torque command switching unit that switches between controlling the electric motor according to the torque command and controlling the electric motor according to a corrected torque command obtained by correcting the torque command based on the control information received from the higher-level control device and the electric motor state information acquired by the electric motor state acquisition unit.

2. The electric motor control device according to claim 1, wherein
the torque command switching unit determines whether or not the driving state is a stable state in which driving of the vehicle is stable based on the driving state information,
in a case where it is determined that the driving state is the stable state, the torque command switching unit outputs the corrected torque command such that the electric motor to be controlled is controlled according to the corrected torque command corrected so as to have a value smaller than the torque command, and
in a case where it is determined that the driving state is not the stable state, the torque command switching unit outputs the torque command such that the electric motor to be controlled is controlled according to the torque command.

3. The electric motor control device according to claim 2, wherein
the torque command switching unit determines whether or not the state of the electric motor to be controlled is a high operation state in which an operation rate of the electric motor is high based on the electric motor state information,
in a case where it is determined that the state of the electric motor to be controlled is the high operation state, the torque command switching unit outputs the corrected torque command such that the electric motor to be controlled is controlled according to the corrected torque command corrected so as to have a value smaller than the torque command, and
in a case where it is determined that the state of the electric motor to be controlled is not the high operation state, the torque command switching unit outputs the torque command such that the electric motor to be controlled is controlled according to the torque command.

4. The electric motor control device according to claim 3, wherein
in a case where it is determined that the driving state is the stable state and the state of the electric motor to be controlled is the high operation state, the torque command switching unit outputs the corrected torque command such that the electric motor to be controlled is controlled according to the corrected torque command corrected so as to have a value smaller than the torque command, and
in a case where it is determined that the driving state is not the stable state, the torque command switching unit outputs the torque command such that the electric motor to be controlled is controlled according to the torque command regardless of whether or not the state of the electric motor to be controlled is the high operation state.

5. The electric motor control device according to claim 2, wherein
the driving state information includes at least one pieces of information of a torque command for another electric motor different from the electric motor to be controlled, a rotation speed of the another electric motor, and a steering angle of the another wheel driven by the another electric motor, and
the torque command switching unit calculates a difference between the electric motor to be controlled and the another electric motor for the at least one piece of information included in the driving state information,
determines that the driving state is the stable state in a case where the calculated difference is less than a threshold, and determines that the driving state is not the stable state in a case where the calculated difference is equal to or more than the threshold.

6. The electric motor control device according to claim 3, wherein
the electric motor state information includes at least one piece of information of a temperature of the electric motor, a magnetic flux of a magnet included in the electric motor, a demagnetization rate of the magnet, and a deterioration level of a coil included in the electric motor, and
the torque command switching unit determines that the state of the electric motor to be controlled is the high operation state in a case where the at least one piece of information included in the electric motor state information exceeds an allowable value, and
determines that the state of the electric motor to be controlled is not the high operation state in a case where the at least one piece of information included in the electric motor state information does not exceed the allowable value.

7. The electric motor control device according to claim 2, wherein
the control information transmission/reception unit receives, from the higher-level control device, a determination result as to whether or not a state of another electric motor different from the electric motor to be controlled is a high operation state in which an operation rate of the electric motor is high,
the torque command switching unit determines whether or not the state of the electric motor to be controlled is the high operation state based on the electric motor state information,
in a case where it is determined that the state of the electric motor to be controlled is the high operation state, the torque command switching unit outputs the corrected torque command such that the electric motor to be controlled is controlled according to the corrected torque command corrected so as to have a value smaller than the torque command, and
in a case where it is determined that the state of the electric motor to be controlled is not the high operation state and the state of the another electric motor is the high operation state, the torque command switching unit outputs the corrected torque command such that the electric motor to be controlled is controlled according to the corrected torque command corrected so as to have a value larger than the torque command.

8. The electric motor control device according to claim 7, wherein when computing the corrected torque command so as to have a value larger than the torque command, the torque command switching unit sets an upper limit value of the corrected torque command such that a tangential force generated in the wheel driven by the electric motor to be controlled becomes equal to or less than a maximum tangential force generatable in the wheel.
